# EUROPEAN PATENT SPECIFICATION

(11) **EP 3 562 163 B1**
(45) Date of publication and mention of the grant of the patent: **19.01.2022**
(21) Application number: 18877316.2
(22) Date of filing: 02.04.2018
(51) Int. Cl.: H04N 21/233, H04N 21/2187, H04N 21/2343, H04N 21/236, H04N 21/854, H04N 5/222

(54) **AUDIO-VIDEO SYNTHESIS METHOD AND SYSTEM**
VERFAHREN UND SYSTEM ZUR SYNTHESE VON VIDEO/AUDIO
PROCÉDÉ ET SYSTÈME DE SYNTHÈSE AUDIO-VIDÉO

(30) Priority: 05.03.2018 CN 201810179713
(43) Date of publication of application: 30.10.2019
(73) Proprietor: Wangsu Science & Technology Co., Ltd., Shanghai 200030 (CN)
(72) Inventor: HUANG, Xuehui, Shanghai 200030 (CN)
(74) Representative: de Arpe Fernandez, Manuel
(86) International application number: PCT/CN2018/081554
(87) International publication number: WO 2019/169682

(56) References cited:
- CN-A- 102 014 262
- CN-A- 103 458 271
- CN-A- 103 686 210
- US-A1- 2013 216 206
- US-A1- 2014 201 334
- US-A1- 2014 267 395
- US-A1- 2016 212 456

## Description

### FIELD OF THE DISCLOSURE

The present disclosure generally relates to the technical field of the Internet and, more particularly, relates to a method and a system for synthesizing audio/video.

### BACKGROUND

In some current application scenarios, usually it is necessary to integrate multiple audio/video signals, so pictures of multiple audio/video signals may be displayed in a same video picture. For example, in the process of video conference and TV broadcasting, usually it is necessary to collect audio/video signals from various angles and scenes; under the control of a preset method or a broadcast control, the collected audio/video signals are then synthesized according to required pictures and sound effects, and finally the synthesized audio/video signals may be provided for users.

However, the existing way of synthesizing audio/video usually requires expensive professional hardware such as broadcast consoles and also requires professional staff to control professional hardware. Consequently, the cost of the existing audio/video synthesis is too high.

Reference is made to US2013/216206 and US2014/201334 which have been cited as exemplary of the state of the art. US2013/216206 provides a method for generation of composited video programming. US2014/201334 provides a method and system for storing and transmitting content for downloading and streaming.

### BRIEF SUMMARY OF THE DISCLOSURE

It will be appreciated that the scope of the invention is in accordance with the claims. Accordingly, there is provided a method in accordance with claim 1 and a system in accordance with claim 10. Further features are provided in the dependent claims.

The purpose of the present disclosure is to provide a method and a system for synthesizing audio/video, which may reduce the cost in the process of audio/video synthesis. To achieve above purpose, in one aspect, the present disclosure provides a method for synthesizing audio/video in accordance with claim 1.

To achieve above purpose, in another aspect, the present disclosure provides a system for synthesizing audio/video in accordance with claim 10.

It can be seen from the above that, for the technical solution provided by the present disclosure, the broadcast client only needs to release control instructions in the process of audio/video synthesis, and the audio/video synthesis process may be accomplished in the cloud system. Specifically, the cloud system may synthesize the first video stream provided for the user client to view from multiple video input streams when the cloud system is synthesizing videos. A video picture of at least one video input stream may be displayed simultaneously in the video picture of the first video stream. In addition, the cloud system may further synthesize the second video stream provided for the broadcast client to view, and the video picture of the second video stream may include a video picture for each video input stream in addition to the video picture of the first video stream. In such way, the broadcast control staff may conveniently monitor the video picture viewed by the users and the video pictures of currently available video input streams in real time. When synthesizing the audio, the cloud system may separately synthesize the first audio stream provided to the user client and the second audio stream provided to the broadcast client based on multiple audio input streams. Subsequently, when encoding the video stream and the audio stream, the first video encoding stream set, the second video encoding stream set, the first audio encoding stream set and the second audio encoding stream set may be generated using the multi-version encoding method. Multiple different versions of encoding streams may be included in each set. In such way, the video encoding stream and audio encoding stream may be determined correspondingly from each set according to the coding types required by the user client and the broadcast client, and the video encoding stream and the audio encoding stream may be integrated into one output stream, and the output stream may be provided to the user client and the broadcast client. In such way, the user client and the broadcast client may be prevented from using more bandwidth to load multiple audio and video data, and only one output stream is required to load, which may save the bandwidth for the user client and the broadcast client. In addition, in the prior art, the push stream output end usually only uses one encoding method, and then transcodes with multiple different encoding methods, via a live transcoding server, into live streams which are distributed to different users, which may cause higher live delay and also affect the output stream quality. In the present disclosure, the encoding method of the output stream may be flexibly adjusted according to the required encoding methods of the user client and the broadcast client, so the matching output stream may be provided to the user client and the broadcast client and the transcoding step may be eliminated. In such way, it may not only save the waiting time for users, and also reduce the resource consumption in the audio/video synthesis process. For the technical solution provided by the present application, the broadcast client does not need professional hardware devices, and only needs network communication function and page display function, which may greatly reduce the cost in the audio/video synthesis process and also improve generality of the audio/video synthesis method.

### BRIEF DESCRIPTION OF THE DRAWINGS

To more clearly illustrate the technical solutions of the present disclosure, the accompanying drawings to be used in the description of the disclosed embodiments are briefly described hereinafter. Obviously, the drawings described below are merely some embodiments of the present disclosure. Other drawings derived from such drawings may be obtained by a person having ordinary skill in the art without creative labor.
FIG. 1 illustrates a structural schematic of a server and a client according to embodiments of the present disclosure;
FIG. 2 illustrates a flowchart of an audio/video synthesis method according to embodiments of the present disclosure;
FIG. 3 illustrates a schematic diagram of a main picture according to embodiments of the present disclosure;
FIG. 4 illustrates a schematic diagram of a user picture according to embodiments of the present disclosure;
FIG. 5 illustrates a structural schematic of an audio/video synthesis system according to embodiments of the present disclosure;
FIG. 6 illustrates a structural schematic of a main picture synthesis according to embodiments of the present disclosure;
FIG. 7 illustrates a structural schematic of a user picture synthesis according to embodiments of the present disclosure; and
FIG. 8 illustrates a structural schematic of a computer terminal according to embodiments of the present disclosure.

### DETAILED DESCRIPTION

To more clearly describe the objectives, technical solutions and advantages of the present disclosure, the present disclosure is further illustrated in detail with reference to the accompanying drawings in conjunction with embodiments.

### Embodiment 1

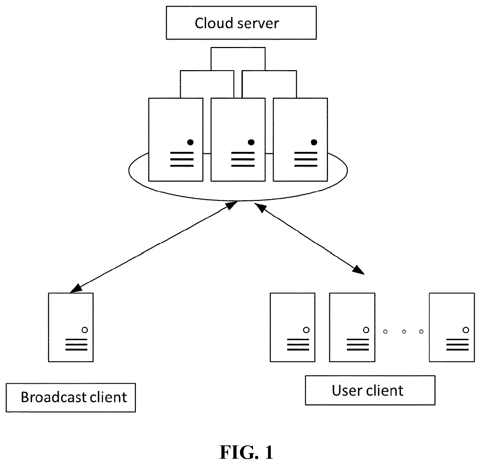

The present disclosure provides a method for synthesizing audio/video, which may be applied to an audio/video synthesis system. The audio/video synthesis system may be deployed on a cloud server. The server may be an independent server or a distributed server cluster and may be flexibly configured according to required computing resources. Referring to FIG. 1, the audio/video synthesis system may exchange data with a broadcast client and a user client. The broadcast client may be the instruction issued party for the audio/video synthesis. The user client may be a terminal device and the synthesized video pictures and audio information may be played on the terminal device. Of course, a server including a live platform or an on-demand platform may be also between the cloud server and the user client in practical applications. The synthesized audio/video output stream may be transmitted to the server of the live platform or the on-demand platform, and then sent to each user client through the server of the live platform or the on-demand platform.

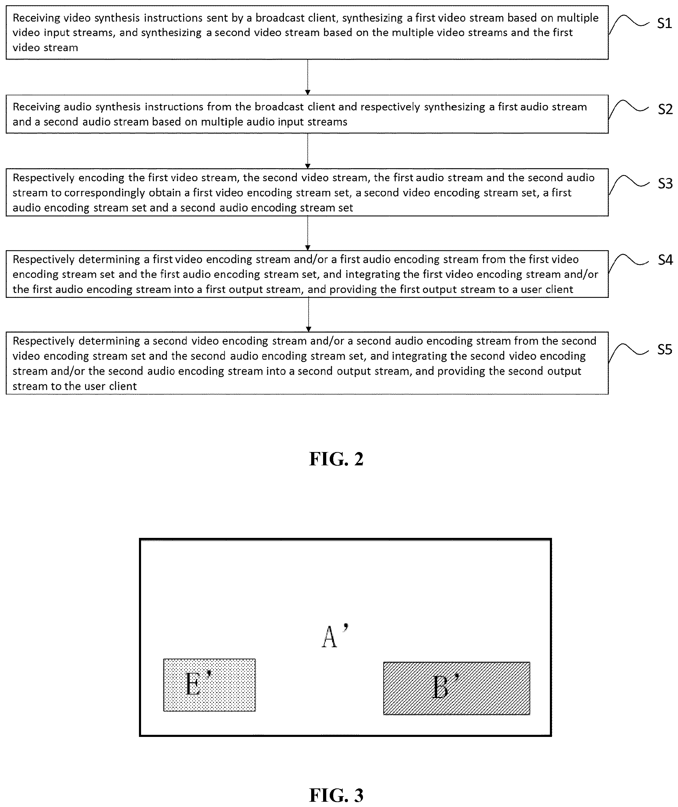

Referring to FIG. 2, the above-mentioned audio/video synthesis method may include following steps.

In S1: receiving video synthesis instructions sent by the broadcast client, synthesizing a first video stream based on multiple video input streams, and synthesizing a second video stream based on the multiple video streams and the first video stream.

In one embodiment, the cloud server may receive a pull-stream instruction sent by the broadcast client and the pull-stream instruction may point to multi-channel audio/video data streams. In such way, the cloud server may acquire the multi-channel audio/video data streams and decode the acquired audio/video data streams. The multi-channel audio/video data streams may be data streams required in an audio/video synthesis process. After acquiring the audio data stream and the video data stream from decoding, the cloud server may separately cache the decoded audio data stream and video data stream, and subsequently call the required audio data stream and/or video data stream independently.

In one embodiment, the broadcast client may send a video synthesis instruction to the cloud server. After receiving the video synthesis instruction, the cloud server may read each video data stream from the cache of the video data stream. Each video data stream from reading the cache may be used as multiple input streams in step S1.

In one embodiment, the cloud server may synthesize two different video pictures. One of the video pictures may be available for viewing by users. Referring to FIG. 3, the video picture may include video images of multiple video input streams. For example, in FIG.3, A', B' and E' represent video pictures of processed video input streams A, B and E respectively. The video pictures of these three video input streams may be integrated into the same video picture for viewing by users. The above-mentioned video stream corresponding to the video picture available for viewing by users may be the first video stream in step S1, and the video picture for viewing by users may be referred to as a main picture. In such way, the video synthesis instruction may point to at least two video data streams. The cloud server may determine at least one target video input stream pointed by the video synthesis instruction from multiple video input streams and integrate the video pictures of the target video input streams into one video picture. The video stream corresponding to the integrated video picture may be used as the first video stream.

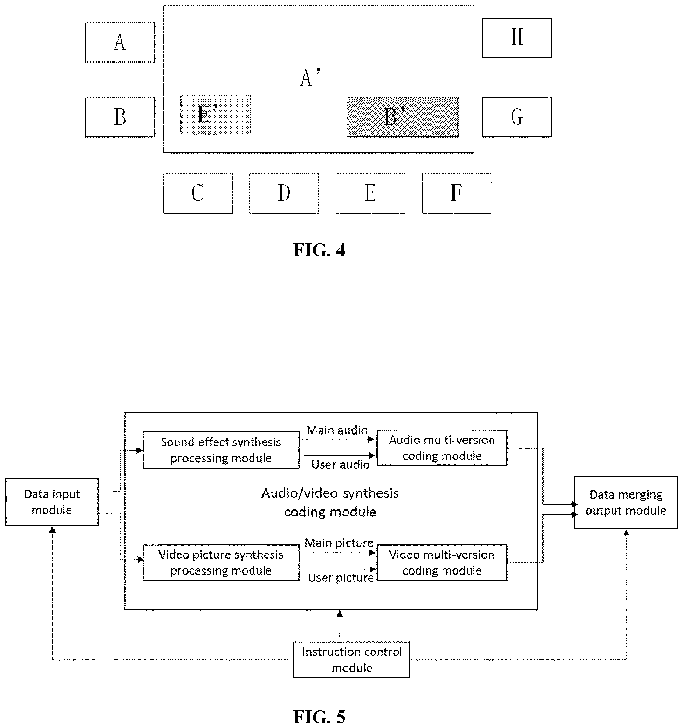

In one embodiment, another video picture synthesized by the cloud server may be provided to broadcast staff for viewing. The broadcast staff need to monitor the video picture viewed by users and also need to view the video pictures of currently available video input streams, so may further synthesize the video picture. The video picture viewed by the broadcast staff may be shown in FIG. 4. In addition to including the video picture of the first video stream, the video picture of each currently available video input stream may also be included in FIG. 4. For example, video input streams A to H are currently available, so the video picture viewed by the broadcast staff may include video pictures of video input streams A to H. The video stream corresponding to the above-mentioned video picture viewed by the broadcast staff may be the second video stream described in step S1 and the video picture viewed by the broadcast staff may also be called as a user picture. Specifically, when the second video stream is synthesizing, the video picture of the first video stream and the video pictures of the multiple video input streams may be integrated into one video picture and the video stream of the integrated video picture may be used as the second video stream.

In one embodiment, whether the first video stream or the second video stream is synthesized, it always involves a process of integrating multiple video pictures into one video picture. Specifically, based on the resolution of the integrated video picture, a background picture matching the resolution may be pre-created. The background picture may be a solid color picture generally. For example, the background picture may be a black background picture. Then, for each video picture to be integrated, the integration parameters of each video picture may be determined separately. The integration parameters may include a picture size, a location, an overlay level, etc. The picture size may represent the size of the video picture to be integrated in the integrated picture; the location may represent the specific location of the video picture to be integrated in the integrated picture; the overlay level may control the overlay order of multiple video pictures to be integrated in the integrated picture, that is, if there is an overlap of the video pictures of two input streams in the integrated picture, the overlay level may determine which video picture is at above and which video picture is at below. In such way, after the integration parameters of each video picture to be integrated are determined, each video picture to be integrated may be added onto the background picture to form the integrated video picture according to the integration parameters.

It should be mentioned that the significance of configuring above solid color background picture is sometimes the video picture to be integrated may not fill entire integrated video picture, so there is necessary to use a solid color background picture as the background color to completely show the integrated video picture. In addition, the solid color background picture may be removed by a post processing in some application scenarios and some customized effect pictures may be added to the removed region. For example, a green background picture may be removed from the integrated video picture using the chroma keying technique and the removed area may be filled with an effect picture which matches the theme of the video picture.

In one embodiment, before the synthesis of multi-channel input streams, each input stream may be pre-processed. The pre-processing includes, but is not limited to, noise removal, background filtering, transparency setting, and contrast enhancement. In addition, after the main picture is synthesized, the main picture may be further post-processed. The post-processing includes, but is not limited to, adding image watermarks, adding texts, and adding preset picture effects (such as live virtual gift effects).

In S2: receiving the audio synthesis instruction from the broadcast client and respectively synthesizing the first audio stream and the second audio stream based on multiple audio input streams.

In one embodiment, the cloud server may also synthesize multiple audio input streams according to the audio synthesis instruction from the broadcast client. Identically, the synthesized audio streams may be separately provided to the user client and the broadcast client. The audio stream provided to the user client may be used as a main audio which is the first audio stream described in step S2; while the audio stream provided to the broadcast client may be used as a user audio which is the second audio stream described in step S2.

In one embodiment, the main audio and the user audio may be synthesized by using multiple audio input streams acquired from the above-mentioned cache of audio data streams. Specifically, the audio synthesis instruction may include synthesis parameters of the main audio. Audio frames of required audio input streams may be acquired from multiple audio input streams according to the synthesis parameters of the main audio. Then, the selected audio frames may be pre-processed, including but not limited to audio volume adjustment, and pitch conversion. Next, the pre-processed audio frames may be mixed according to the mixing parameter of the main audio. The mixing process may include a blending of different sound channels and a mixing of loudness. After the main audio is obtained by synthesizing, the main audio may be post-processed, and the post-processing includes, but is not limited to, adding preset sound effects such as whistles, and applause and cheers. In such way, the first audio stream provided to the user client may be generated.

In one embodiment, the cloud server may determine whether the audio synthesis instructions include an audio copy instruction when synthesizing the second audio stream. If included, the first audio stream may be copied, and the copied data may be used as the second audio stream. If not included, the user audio synthesis may be accomplished according to the user audio synthesis parameters included in the audio synthesis instructions and the above-mentioned process of synthesizing the main audio.

In one embodiment, after synthesizing the second audio stream, staff at the broadcast client may audition the second audio stream and may further modify the second audio stream. Specifically, the cloud server may receive regulation instructions including audio synthesis parameters from the broadcast client. The audio synthesis parameters in the regulation instructions may be used for the cloud server to adjust the second audio stream. For example, the cloud server may remove partial sound effects in the second audio stream or add new sound effects or modify partial sound effects. After the adjustments, the cloud server may feedback the adjusted second audio stream to the broadcast client. After receiving the adjusted second audio stream by the broadcast client, staff may continue to audition. If the adjusted second audio stream meets expectations, staff may send an audio synchronization instruction to the cloud server via the broadcast client. After receiving the audio synchronization instruction sent by the broadcast client, the cloud server may adjust the first audio stream provided to the user client and provide the adjusted first audio stream to the user client according to the audio synthesis parameters used for adjusting the second audio stream. In such way, the audio stream provided to the user client may be auditioned and modified in the broadcast client in advance. After completing of the modification, the first audio stream provided to the user client may be processed identically according to the audio synthesis parameters used for the modification, which may ensure that the sound effects heard by users meet expectations of the staff.

In another embodiment, in addition of receiving the above-mentioned second audio stream, the broadcast client may also monitor the first audio stream received by the use client. Specifically, the broadcast client may send an audio switching instruction to the cloud server. After receiving the audio switching instruction, the cloud server may respond to the audio switching instruction and send the first output stream, which is provided to the user client, to the broadcast client. In such way, the broadcast client may monitor the sound effect that users may hear. After the broadcast client send the audio switching instruction to the cloud client again, the cloud server may provide the second audio stream to the broadcast client again. In such way, the broadcast client may switch back and forth between the first audio stream and the second audio stream.

It can be seen that two sets of audio and video data for different purposes may be synthesized according to the above-mentioned technical solution of the present disclosure. One set may be provided to the user client and another set may be provided to the broadcast client. Staff who control the online synthesis of live content may view the main picture seen by viewers and also may view the real-time picture of currently available video input stream through viewing the user picture, so the whole situation may be overviewed. At the same time, staff may hear the audio output to viewers, switch to user's audio, and also test and audition the user's audio. The synthesis parameters of the user's audio may be sent to the synthesis parameters of the main audio to adjust the main audio when the audition is satisfied.

In S3: respectively encoding the first video stream, the second video stream, the first audio stream and the second audio stream to correspondingly obtain a first video encoding stream set, a second video encoding stream set, a first audio encoding stream set and a second audio encoding stream set.

In one embodiment, after completing the synthesis of above-mentioned video picture or audio, the cloud server may encode the generated first video stream, the second video stream, the first audio stream and the second audio stream. In the existing audio/video synthesis, generally only one version of audio/video data may be encoded, and a network relay server performs transcoding on multiple different audio/video attributes after the pushing. However, this existing method has some disadvantages. For example, transcoding on multiple different audio/video attributes by the relay server may cause picture quality loss by two encoding/decoding processes and also cause high delay. In one embodiment, in order to adapt to different terminals (such as set-top boxes, personal computers, and smart phones) and different internet access circumstances (such as optical fibers, and mobile cellular networks), a multi-version encoding may be performed on the synthesized audio stream and video stream.

In one embodiment, when the multi-version encoding is performed on the first audio stream and the second audio stream, firstly, audio data with multiple different sampling rates and sound channels may be generated by switching sampling rates and sound channels in the audio multi-version encoding parameter set. Then the audio data for each sampling rate and sound channel may be encoded according to different audio encoding settings. The different audio encoding settings include, but are not limited to, different encoding rates, and encoding formats.

In one embodiment, when the multi-version encoding is performed on the first video stream and the second video stream, firstly, video frames with multiple different resolutions may be generated by zooming resolutions in the video multi-version encoding parameter set. Then, the video frames with each different resolution may be encoded according to different video coding settings such as frame rates, encoding formats, encoding rates etc.

In one embodiment, when performing the multi-version encoding on the synthesized audio/video streams, the multi-version encoding parameters may be adjusted in real-time according to different user clients. Specifically, video encoding parameters and audio encoding parameters required for each output stream may be acquired to determine a required encoding parameter set. The required encoding parameter set may summarize the audio encoding parameters and video encoding parameters for current output stream. Then, the required encoding parameter set may be compared with the current encoding parameter set. The current encoding parameter set may be the encoding parameter set currently used by the cloud server. If these two sets are inconsistent with each other, it indicates that, comparing to the current encoding parameter set, the output stream corresponding to the current user client has changed. At this time, video encoding parameters and/or audio encoding parameters newly added to the required encoding parameter set may be determined, and also the newly added video encoding parameters and/or audio encoding parameters may be added into the current encoding parameter set. In addition, target video encoding parameters and/or target audio encoding parameters, included in the current encoding parameter set but not included in the required encoding parameter set, may be determined, and the target video encoding parameters and/or the target audio encoding parameters may be removed from the current encoding parameter set. In such way, the encoding parameters in the current encoding parameter set may be added and deleted correspondingly. The current encoding parameter set after the above-mentioned adjustment may only include the required encoding parameters of the current output stream. In such way, the first video stream, the second video stream, the first audio stream and the second audio stream may be encoded respectively according to the video encoding parameters and audio encoding parameters in the current encoding parameter set after adjustment.

Since it is the multi-version encoding, each audio stream/video stream may correspond multiple different encoding versions, so that the first video encoding stream set, the second video encoding stream set, the first audio encoding stream set, and the second audio encoding stream set may be obtained correspondingly. Each set may include multiple different versions of encoding streams.

In S4: respectively determining a first video encoding stream and a first audio encoding stream from the first video encoding stream set and the first audio encoding stream set, and the first video encoding stream and the first audio encoding stream may be integrated into a first output stream and the first output stream are provided to the user client.

In S5: respectively determining a second video encoding stream and a second audio encoding stream from the second video encoding stream set and the second audio encoding stream set, and the second video encoding stream and the second audio encoding stream may be integrated into a second output stream and the second output stream are provided to the user client.

In one embodiment, when the user client or the broadcast client is pushing the output steam, adaptive audio/video encoding streams may be selected correspondingly from the encoding streams according to the encoding/encoding versions supported by the user client and the broadcast client. Specifically, the first video encoding stream and the first audio encoding stream may be determined from the first video encoding stream set and the first audio encoding stream set respectively according to the output stream provided to the user client, the first video encoding stream and the first audio encoding stream may be integrated into the first output stream which may be provided to the user client. It should be mentioned that in an embodiment not covered by the claimed invention only the audio stream, not the video stream, may be selected when integrating the first output stream. It may be used for applications such as internet radio stations etc. in case of audio-only situation. More than one audio stream or video stream may also be selected in case of multiple audio tracks or multiple video tracks, and the user client may freely switch audio and video tracks. Even only the video stream, not the audio stream, may be selected for output in case of similar silent effect.

Correspondingly, the second video encoding stream and the second audio encoding stream may be determined from the second video encoding stream set and the second audio encoding stream set respectively according to the output stream provided to the broadcast client, and the second video encoding stream and the second audio encoding stream may be integrated into the second output stream which may be provided to the broadcast client.

In one embodiment, for each output stream, the audio stream and video stream are selected from the encoding stream sets correspondingly and are pushed according to the push stream address corresponding to the output stream after the integration, which corresponds to live scenarios; it may be saved as local files after the integration, which corresponds to on-demand playback and review scenarios, for example. In the processing of pushing to the user client and/or the broadcast client, the cloud server may receive instructions in real-time of adding, deleting, modifying push stream addresses and push stream merging parameters sent from the user client or the broadcast client, and so make corresponding changes in real-time.

In one embodiment, the required output stream set and the current output stream set may be compared when the first output stream is provided to the user client and the second output stream is provided to the broadcast client. If these two sets are inconsistent with each other, a newly added output stream in the required output stream set may be determined, and additional output push stream connections may be established according to the push stream address of the newly added output stream. These additional established output push stream connections may correspond to the user client and/or the broadcast client to provide the newly added output stream to the user client and/or the broadcast client. In addition, a target output stream included in the current output stream set but not included in the required output stream set may be determined, and the push stream connections of the target output stream may be cancelled to stop providing the target output stream.

In one embodiment, before providing the newly added output stream to the user client and/or the broadcast client, the integration parameters corresponding to each newly added output stream may be configured. The integration parameters may be used to limit the video encoding stream and/or the audio encoding stream included in the newly added output stream. In such way, the audio/video stream may be selected correspondingly from the encoding stream set according to the integration parameters.

As can be seen from the above, the present disclosure supports multiple output streams and each output stream may have information such as different resolutions, encoding rates, and sampling rates. When receiving instructions of adding, deleting and modifying the output stream settings, the cloud sever may analyze the required multi-version encoding settings and then compare with the currently used multi-version encoding settings. In such way, the cloud server may newly add, change or cancel the corresponding multi-version encoding settings in real-time, and also add, cancel or modify output push stream and related parameters.

### Embodiment 2

The present disclosure also provides an audio/video synthesis system and this system may be deployed in a cloud server. Referring to FIG. 5, the system includes an instruction control module, a data stream synthesis and processing module, a data stream multi-version encoding module and a data merging output module.

The instruction control module is configured to receive a video synthesis instruction and an audio synthesis instruction from the broadcast client.

In one embodiment, the data stream synthesis and processing module may also a video picture synthesis and processing module and a sound effect synthesis and processing module; the data stream multi-version encoding module may also include a video multi-version encoding module and an audio multi-version encoding module.

The video picture synthesis and processing module is configured to synthesize a first video stream based on multiple video input streams and synthesize a second video stream based on multiple video streams and the first video stream.

The sound effect synthesis and processing module is configured to synthesize a first audio stream and a second audio stream respectively based on multiple audio input streams.

The video multi-version encoding module is configured to encode the first video stream and the second video stream respectively to correspondingly obtain a first video encoding stream set and a second video encoding stream set.

The audio multi-version encoding module is configured to encode the first audio stream and the second audio stream respectively to correspondingly obtain a first audio encoding stream set and a second audio encoding stream set.

The data merging output module is configured to determine the first video encoding stream and the first audio encoding stream from the first video encoding stream set and the first audio encoding stream set respectively, and integrate the first video encoding stream and the first audio encoding stream into a first output stream which is provided to the user client; the data merging output module is also configured to determine the second video encoding stream and the second audio encoding stream from the second video encoding stream set and the second audio encoding stream set respectively, and integrate the second video encoding stream and the second audio encoding stream into a second output stream which is provided to the broadcast client.

Referring to FIG. 5, in one embodiment, the system may further include:
a data input module configured to receive a pull stream instruction from the broadcast client and acquire multiple audio and video data streams.

In addition, the system may further include a decoding cache module, which is configured to decode the audio/video data stream into a video data stream and an audio data stream, and cache the decoded video data stream and the audio data stream separately.

Correspondingly, multiple video input streams and multiple audio input streams are read from caches of the video data stream and the audio data stream respectively.

The above-mentioned video picture synthesis and processing module, the sound effect synthesis and processing module, the video multi-version coding module and the audio multi-version coding module may be integrated into the audio/video synthesis and coding module.

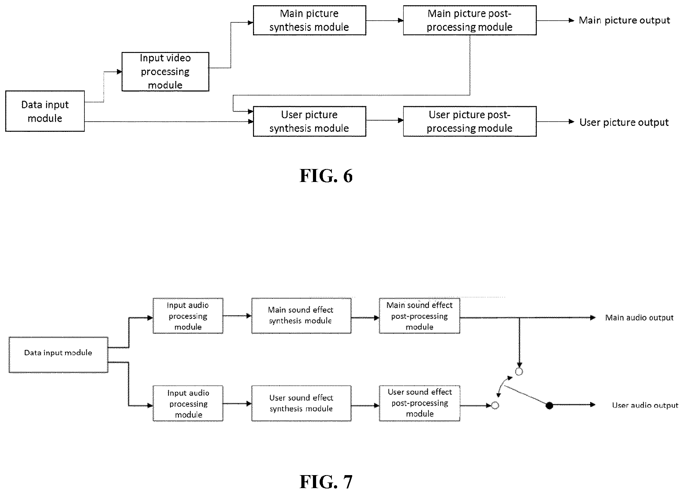

Referring to FIG. 6, the data input module may transmit multiple video input streams to an input video processing module when synthesizing the main picture and the user picture, and the input video processing module may pre-process each input stream. The pre-processing includes, but is not limited to, noise removal, background filtering, transparency setting, and contrast enhancement. Then the main picture may be synthesized using the main picture synthesis module. In addition, the main picture may be further post-processed using the main picture post-processing module after the main picture is synthesized. The post-processing includes, but is not limited to, adding picture watermark, adding text, and adding preset screen effect (such as live virtual gift effect).

The main picture and multiple video input streams may be input together and the user picture may be synthesized using a user picture synthesis module when synthesizing the user picture. Identically, the user picture may be further post-processed using a user picture post-processing module. The post-processing includes, but is not limited to, adding picture watermark, adding text, and adding preset screen effect (such as live virtual gift effect).

Referring to FIG. 7, the data input module may use the provided multiple audio input streams as the input streams respectively using by the synthesized main audio and the user audio when the main audio and the user audio are synthesizing. Then, the audio input stream may be pre-processed by an input audio processing module. The pre-processing includes, but is not limited to, audio filtering, tone processing, and volume adjustment.

Then, the main audio and the user audio are synthesized respectively by a main sound effect synthesis module and a user sound effect synthesis module. Specifically, the pre-processed audio frames may be mixed according to the mixing parameters of the main audio and the user audio. The mixing process may include a blending of different sound channels and a mixing of loudness. After synthesizing the main audio and the user audio, the main audio and the user audio may be post-processed respectively by the main sound effect post-processing module and the user sound effect post-processing module. The post-processing includes, but is not limited to, adding external preset sounds such as applause, cheers, whistling, and any audio preset effects.

In one embodiment, the video picture synthesis processing module may also be configured to integrate the video picture of the first video stream and video pictures of multiple video input streams into one video picture, and the video stream corresponding to the integrated video picture is used as the second video stream.

In one embodiment, the video picture synthesis and processing module includes:
an integration parameter determination unit which is configured to pre-create a background picture matching the resolution of the integrated video picture, and determine integration parameters of each video picture to be integrated, where the integration parameters include a picture size, a location and an overlay order; and
a picture addition unit which is configured to add each video picture to be integrated onto the background picture to form the integrated video picture according to the integration parameters.

In one embodiment, the system may further include:
an audio adjustment module which is configured to receive regulation instructions including audio synthesis parameters sent by the broadcast client, and adjust the second audio stream according to the audio synthesis parameters, and feedback the adjusted second audio stream to the broadcast client; and
an audio synchronization module which is configured receive audio synchronization instructions sent by the broadcast client, and adjust the first audio stream according to the audio synthesis parameters, and provide the adjusted first audio stream to the user client.

In one embodiment, the system may further include:
a parameter acquisition module which is configured to acquire required video encoding parameters and audio encoding parameters for each output stream to determine a required encoding parameter set;
a parameter addition module which is configured to compare the required encoding parameter set with the current encoding parameter set, and if these two sets are inconsistent with each other, determine newly added video encoding parameters and/or audio encoding parameters in the required encoding parameter set, and add the newly added video encoding parameters and/or audio encoding parameters into the current encoding parameter set;
a parameter deletion module which is configured to determine target video encoding parameters and/or target audio encoding parameters included in the current encoding parameter set but not included in the required encoding parameter set and remove the target video encoding parameters and/or target audio encoding parameters from the current encoding parameter set; and
an encoding module which is configured to encode the first video stream, the second video stream, the first audio stream and the second audio stream respectively according to the video encoding parameters and the audio encoding parameters in the current encoding parameter set after the adjustment.

In one embodiment, the system may further include:
an output stream addition module which is configured to compare the required output stream set and the current output stream set, and if these two sets are inconsistent with each other, determine the newly added output stream in the required output stream set and establish additional output push stream connections according to the push stream addresses of the newly added output streams, where these additional output stream connections may correspond to the user client and/or the broadcast client and provide newly added output stream to the user client and/or the broadcast client; and
an output deletion module which is configured to determine the target output stream included in the current output stream set but not included in the required output stream set and cancel push stream connections corresponding to the target output stream to stop providing the target output stream.

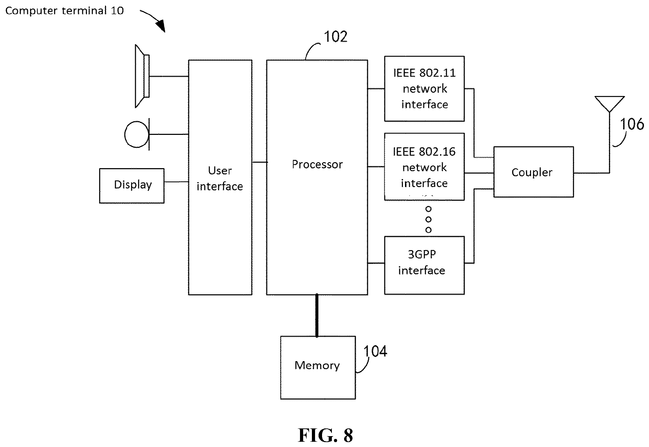

Referring to FIG. 8, in the present disclosure, the technical solution in the above-mentioned embodiment may be applied to a computer terminal 10 described in FIG. 8. The computer terminal 10 may include one or more (although only one is shown) processors 102 (the processor 102 may include, but be not limited to, a microprocessor MCU and a programmable logic device FPGA), a memory 104 used to store data, a transmission module 106 used for communication functions. Those skilled in the art may understand that the structure shown in FIG. 8 is merely illustrative and are not intended to limit the structure of the above electronic device. For example, the computer terminal 10 may further include more or less components than shown in FIG. 8 or have different configurations from shown in FIG. 8.

The memory 104 may also be used to store software programs and modules of application software, and the processor 102 may execute a variety of functional applications and data processing by running the software programs and modules which are stored in the memory 104. The memory 104 may include high-speed random-access memory and may also include non-volatile memory such as one or more magnetic storage devices, flash memory or other non-volatile solid-state memory. In some examples, the processor 104 may further include remote memory relative to the processor 102 and the remote memory may connect to the computer terminal 10 via a network. The above-mentioned network examples include, but not limited to, the Internet, enterprise intranets, local area networks, mobile communication networks and combinations thereof.

The transmission device 106 is used receive or transmit data via a network. The above-mentioned specific network examples may further include a wireless network provided by a communication provider of the computer terminal 10. In an example, the transmission device 106 may include a network interface controller (NIC) which may communicate with the Internet by connecting with other network devices via a base station. In an example, the transmission device 106 may be a radio frequency (RF) module which may communicate with the Internet via a wireless method.

It can be seen from the above that, for the technical solution provided by the present disclosure, the broadcast client only needs to release control instructions in the process of audio/video synthesis, and the audio/video synthesis process may be accomplished in the cloud system. Specifically, the cloud system may synthesize the first video stream provided for the user client to view from multiple video input streams when the cloud system is synthesizing videos. A video picture of at least one video input stream may be displayed simultaneously in the video picture of the first video stream. In addition, the cloud system may further synthesize the second video stream provided for the broadcast client to view, and the video picture of the second video stream may include a video picture for each video input stream in addition to the video picture of the first video stream. In such way, the broadcast control staff may conveniently monitor the video picture viewed by the users and the video pictures of currently available video input streams in real time. When synthesizing the audio, the cloud system may separately synthesize the first audio stream provided to the user client and the second audio stream provided to the broadcast client based on multiple audio input streams. Subsequently, when encoding the video stream and the audio stream, the first video encoding stream set, the second video encoding stream set, the first audio encoding stream set and the second audio encoding stream set may be generated using the multi-version encoding method. Multiple different versions of encoding streams may be included in each set. In such way, the video encoding stream and audio encoding stream may be determined correspondingly from each set according to the coding types required by the user client and the broadcast client, and the video encoding stream and the audio encoding stream may be integrated into one output stream, and the output stream may be provided to the user client and the broadcast client. In such way, the user client and the broadcast client may be prevented from using more bandwidth to load multiple audio and video data, and only one output stream is required to load, which may save the bandwidth for the user client and the broadcast client. In addition, in the prior art, the push stream output end usually only uses one encoding method, and then transcodes with multiple different encoding methods, via a live transcoding server, into live streams which are distributed to different users, which may cause higher live delay and also affect the output stream quality. In the present disclosure, the encoding method of the output stream may be flexibly adjusted according to the required encoding methods of the user client and the broadcast client, so the matching output stream may be provided to the user client and the broadcast client and the transcoding step may be eliminated. In such way, it may not only save the waiting time for users, and also reduce the resource consumption in the audio/video synthesis process. For the technical solution provided by the present application, the broadcast client does not need professional hardware devices, and only needs network communication function and page display function, which may greatly reduce the cost in the audio/video synthesis process and also improve generality of the audio/video synthesis method.

In addition, in the general audio/video synthesis process, the staff console normally displays the synthesized viewer picture and pictures of all input streams by separately pulling each input stream and the synthesized output stream. This approach has two problems:
1) the console needs to pull multiple input streams, which makes a high demand for the console bandwidth; and
2) there is no guarantee that, in each stream picture and the synthesized live content pictures displayed by the console, each stream picture is consistent.

The user picture of the present disclosure may combine the synthesized output picture (main picture) and the currently required input stream picture into one video frame, so the front-end broadcast client only needs to pull one user picture stream to achieve the function of conventional broadcast console. In such way, on the one hand, the network bandwidth of the broadcast client is saved; on the other hand, all input streams are acquired from the cloud server and synthesized in the cloud server, which may ensure the synchronization of all stream pictures.

Through the descriptions of aforementioned embodiments, those skilled in the art may clearly understand that the embodiments may be implemented by means of software in conjunction with an essential common hardware platform or may be simply implemented by hardware. Based on such understanding, the essential part of the aforementioned technical solutions or the part that contribute to the prior art may be embodied in the form of software products. The software products may be stored in computer readable storage media, such as ROM/RAM, magnetic disk, and optical disk, and may include a plurality of instructions to enable a computer device (may be a personal computer, a server, or a network device) to execute the methods described in various embodiments or parts of the embodiments.

The foregoing are merely certain preferred embodiments of the present disclosure, and are not intended to limit the present disclosure.

## Claims

1. A method of synthesizing audio/video for application on an audio/video synthesis system, the audio/video synthesis system is deployed on a cloud server, the method comprising:
receiving video synthesis instructions sent by a broadcast client, synthesizing a first video stream based on multiple video input streams, and synthesizing a second video stream based on the multiple video input streams and the first video stream;
in response to the video synthesis instructions, determining one or more target video input streams from the multiple video input streams and integrating the video pictures of the one or more target video input streams into one video picture, wherein a video stream corresponding to the integrated video picture which includes the video pictures of the one or more target video input streams is used as the first video stream; and integrating the video picture of the first video stream and the video pictures of the multiple video input streams into one video picture, wherein a video stream corresponding to the integrated video picture which includes the video picture of the first video stream and the video pictures of the multiple video input streams is used as the second video stream;
receiving audio synthesis instructions from the broadcast client and respectively synthesizing a first audio stream and a second audio stream based on multiple audio input streams;
respectively encoding the first video stream, the second video stream, the first audio stream and the second audio stream in multiple different encoding versions to correspondingly obtain a first video encoding stream set, a second video encoding stream set, a first audio encoding stream set and a second audio encoding stream set;
respectively selecting a first video encoding stream and a first audio encoding stream from the first video encoding stream set and the first audio encoding stream set, and integrating the first video encoding stream and the first audio encoding stream into a first output stream, and providing the first output stream to a user client; and
respectively selecting a second video encoding stream and a second audio encoding stream from the second video encoding stream set and the second audio encoding stream set, and integrating the second video encoding stream and the second audio encoding stream into a second output stream, and providing the second output stream to the broadcast client.

2. The method according to claim 1, wherein,
before receiving the video synthesis instructions from the broadcast client, the method further includes:
receiving a pull stream instruction from the broadcast client and in response acquiring multiple audio/video data streams;
decoding each audio/video data stream of the multiple audio/video data streams into a video data stream and an audio data stream, and caching the decoded video data stream and audio data stream separately; and
correspondingly, reading the multiple video input streams and the multiple audio input streams from caches of the video data stream and the audio data stream respectively.

3. The method according to claim 1, wherein, when integrating the multiple video pictures into one video picture, the method further includes:
pre-creating a background picture matching a resolution of the integrated video picture and determining integration parameters of each video picture to be integrated, wherein the integration parameters include at least one of a picture size, a location and an overlay level; and
adding each video picture to be integrated onto the background picture to form the integrated video picture according to the integration parameters.

4. The method according to claim 1, wherein, after synthesizing the second audio stream, the method further includes:
receiving regulation instructions including audio synthesis parameters sent by the broadcast client, adjusting the second audio stream according to the audio synthesis parameters, and feeding back the adjusted second audio stream to the broadcast client; and
receiving an audio synchronization instruction sent by the broadcast client, adjusting the first audio stream according to the audio synthesis parameters, and providing the adjusted first audio stream to the user client.

5. The method according to claim 1, wherein, when respectively synthesizing the first audio stream and the second audio stream, the method further includes:
determining whether the audio synthesis instructions include an audio copy instruction, and if included, copying the first audio stream, and using the copied data as the second audio stream.

6. The method according to claim 1, further including:
receiving an audio switching instruction sent by the broadcast client, and in response to the audio switching instruction, sending the first output stream to the broadcast client.

7. The method according to claim 1, wherein encoding the first video stream, the second video stream, the first audio stream and the second audio stream respectively includes:
acquiring video encoding parameters and audio encoding parameters for each output stream to determine a required encoding parameter set;
comparing the required encoding parameter set with a current encoding parameter set, determining video encoding parameters and/or audio encoding parameters that are newly added to the required encoding parameter set if the required encoding parameter set and the current encoding parameter set are inconsistent with each other, and adding the newly added video encoding parameters and/or audio encoding parameters to the current encoding parameter set;
determining target video encoding parameters and/or target audio encoding parameters, that are included in the current encoding parameter set but not included in the required encoding parameter set, and removing the target video encoding parameters and/or the target audio encoding parameters from the current encoding parameter set; and
encoding the first video stream, the second video stream, the first audio stream and the second audio stream respectively according to the video encoding parameters and audio encoding parameters in the current encoding parameter set after adjustment.

8. The method according to claim 1, wherein, when providing the first output stream to the user client and providing the second output stream to the broadcast client, the method further includes:
comparing a required output stream set and a current output stream set, determining a newly added output stream in the required output stream set if the required output stream set and the current output stream set are inconsistent with each other, and establishing a relationship between the newly added output stream and the user client and/or the broadcast client that correspond to the push stream address of the newly added output stream, and providing the newly added output stream to the user client and/or the broadcast client; and
determining a target output stream included in the current output stream set but not included in the required output stream set and stop providing the target output stream.

9. The method according to claim 8, wherein, before providing the newly added output stream to the user client and/or the broadcast client, the method further includes:
configuring integration parameters corresponding to each newly added output stream, wherein the integration parameters are used to define the video encoding stream and/or the audio encoding stream included in the newly added output stream.

10. A system of synthesizing audio/video, wherein the system is deployed on a cloud server and the system includes an instruction control module, a data stream synthesis and processing module, a data stream multi-version encoding module and a data merging output module, wherein:
the instruction control module is configured to receive a video synthesis instruction and an audio synthesis instruction from a broadcast client;
the data stream synthesis and processing module is configured to synthesize a first video stream based on multiple video input streams and synthesize a second video stream based on the multiple video input streams and the first video stream; and configured to respectively synthesize a first audio stream and a second audio stream based on multiple audio input streams;
wherein the data stream synthesis and processing module includes a video picture synthesis and processing module, the video picture synthesis and processing module is further configured to:
in response to the video synthesis instruction, determine one or more target video input streams from the multiple video input streams and integrate the video pictures of the one or more target video input streams into one video picture, wherein a video stream corresponding to the integrated video picture which includes the video pictures of the one or more target video input streams is used as the first video stream; and integrate the video picture of the first video stream and video pictures of the multiple video input streams into one video picture, wherein the video stream corresponding to the integrated video picture which includes the video picture of the first video stream and the video pictures of the multiple video input streams is used as the second video stream;
the data stream multi-version encoding module is configured to encode the first video stream and the second video stream respectively in multiple different encoding versions to correspondingly obtain a first video encoding stream set and a second video encoding stream set; and configured to encode the first audio stream and the second audio stream respectively in multiple different encoding versions to correspondingly obtain a first audio encoding stream set and a second audio encoding stream set; and
the data merging output module is configured to determine a first video encoding stream and a first audio encoding stream from the first video encoding stream set and the first audio encoding stream set respectively, and integrate the first video encoding stream and the first audio encoding stream into a first output stream which is provided to a user client; and also configured to determine a second video encoding stream and a second audio encoding stream from the second video encoding stream set and the second audio encoding stream set respectively, and integrate the second video encoding stream and the second audio encoding stream into a second output stream which is provided to the broadcast client.

11. The system according to claim 10, further including:
a data input module, configured to receive a pull stream instruction from the broadcast client and in response to acquire multiple audio and video data streams;
a decoding cache module, configured to decode each audio/video data stream of said multiple audio and video data streams into a video data stream and an audio data stream, and cache the decoded video data stream and audio data stream separately, wherein correspondingly, the multiple video input streams and multiple audio input streams are read from caches of the video data stream and the audio data stream respectively.

12. The system according to claim 10, wherein the video picture synthesis and processing module includes:
an integration parameter determination unit, configured to pre-create a background picture matching a resolution of the integrated video picture, and determine integration parameters of each video picture to be integrated, wherein the integration parameters include at least one of a picture size, a location and an overlay order; and
a picture addition unit, configured to add each video picture to be integrated onto the background picture to form the integrated video picture according to the integration parameters.

## Patentansprüche

1. Eine Methode zur Audio/Video-Synthetisierung zwecks Anwendung bei einem Audio/Video-Synthesieirungssystem, bei der das Audio/Video-System in einem Cloud-Server eingesetzt wird, Methode, die Folgendes umfasst:
Empfang von Videosyntheseanweisungen, die von einem Rundfunkkunden gesandt wurden, Synthetisierung eines ersten Video-Stroms basierend auf vielzähligen Videoeingabeströmen und Synthetisierung eines zweiten Video-Stroms basierend auf vielzähligen Videoeingabeströmen und dem ersten Video-Strom;
in Beantwortung auf die Videosyntheseanweisungen, Bestimmung von einem oder mehreren Zielvideoeingabestrom/strömen von den vielzähligen Videoeingabeströmen und Integration der Videobilder des einen oder der mehreren Zielvideoeingabestroms/strömen in einem Videobild, wobei der dem integrierten Videobild entsprechende Video-Strom, der die Videobilder von dem einen oder den mehreren Videoeingabeströmen einschliesst, als der erste Video-Strom verwendet wird; und Integration des Videobildes des ersten Video-Stroms und der Videobilder der vielzähligen Videoeingabeströme in ein Videobild, wobei ein dem integrierten Videobild entsprechender Video-Strom, der das Videobild des ersten Video-Stroms und die Videobilder der vielzähligen Videoeingabeströme einschliesst, als zweiter Video-Strom verwendet wird;
Empfang von Audiosyntheseanweisungen vom Rundfunkkunden beziehungsweise Synthetisierung eines ersten Audio-Stroms und eines zweiten Audio-Stroms basierend auf vielzähligen Audioeingabeströmen;
jeweiliges Codieren des ersten Video-Stroms, des zweiten Video-Stroms, des ersten Audio-Stroms und des zweiten Audio-Stroms in vielzähligen, verschiedenen Codierungsversionen, um entsprechend einen ersten Video-Codierungs-Stromsatz, einen zweiten Video-Codierungs-Stromsatz, einen ersten Audio-Codierungs-Stromsatz und einen zweiten Audio-Codierungs-Stromsatz zu erhalten;
jeweilige Auswahl eines ersten Video-Codierungs-Stroms und eines ersten Audio-Codierungs-Stroms
aus dem ersten Video-Codierungs-Stromsatz und dem ersten Audio-Codierungs-Stromsatz und Integration des ersten Video-Codierungs-Stroms und
des ersten Audio-Codierungs-Stroms in einen ersten Ausgabestrom,
und Bereitstellung des ersten Ausgabestroms an einen Benutzerkunden; und
jeweilige Auswahl eines zweiten Video-Codierungs-Stroms und eines zweiten Audio-Codierungs-Stroms aus dem zweiten Video-Codierungs-Stromsatz und dem zweiten Audio-Codierungs-Stromsatz, und Integration des zweiten Video-Codierungs-Stroms und des zweiten Audio-Codierungs-Stroms in einen zweiten Ausgabestrom, und Bereitstellung des zweiten Ausgabestroms an den Rundfunkkunden.

2. Die Methode gemäss Anspruch 1, bei der vor Empfang der Videosyntheseanweisungen vom Rundfunkkunden, die Methode weiter Folgendes einschliesst:
Empfang einer Pullstrom-Anweisung vom Rundfunkkunden und in Beantwortung Erfassen von vielzähligen Audio/Video-Datenströmen;
Decodieren eines jeden Audio/Video-Datenstroms der vielzähligen Audio/VideoDatenströme in einem Video-Datenstrom und einem Audio-Datenstrom und getrenntes Caching des decodierten Video-Datenstroms und Audio-Datenstroms; und entsprechend Lesen der vielzähligen Videoeingabeströme und der vielzähligen Audioeingabeströme von den Caches des Video-Datenstroms und jeweils des Audio-Datenstroms.

3. Die Methode gemäss Anspruch 1, bei der, wenn die vielzähligen Videobilder in einem Videobild integriert werden, die Methode weiter Folgendes einschliesst:
Erneutes Erstellen eines Hintergrundbildes, das auf eine Auflösung des integrierten Videobildes abgestimmt ist, und Bestimmung der Integrationsparameter eines jeden, zu integrierenden Videobildes, wobei die Integrationsparameter mindestens eins einer Bildgrösse, einer Lage und eines Einblendungsniveaus einschliesst und
Hinzufügen eines jeden, zu integrierenden Videobildes im Hintergrundbild, um das integrierte Videobild übereinstimmend mit den Integrationsparametern zu bilden.

4. Die Methode gemäss Anspruch 1, bei der nach Synthetisieren des zweiten Audio-Stroms die Methode weiter Folgendes einschliesst:
Empfang von Vorschriftsanweisungen, einschliesslich der vom Rundfunkkunden gesandten Audio-Syntheseparameter, Einstellung des zweiten Audio-Stroms übereinstimmend mit den Audio-Syntheseparametern, und Rückführung des eingestellten, zweiten Audio-Stroms an den Rundfunkkunden; und
Empfang einer vom Rundfunkkunden gesandten Audio-Synchronisierungsanweisung, Einstellung des ersten Audio-Stroms übereinstimmend mit den Audiosyntheseparametern, und Bereitstellung dem Benutzerkunden des eingestellten, ersten Audio-Stroms.

5. Die Methode gemäss Anspruch 1, bei der, wenn jeweils der erste Audio-Strom und der zweite Audio-Strom synthetisiert werden, die Methode weiter Folgendes einschliesst:
Bestimmung, ob die Audio-Syntheseanweisungen eine Audio-Kopieranweisung einschliesst, und wenn eingeschlossen, Kopieren des ersten Audio-Stroms, und Benutzen der kopierten Daten als den zweiten Audio-Strom.

6. Die Methode gemäss Anspruch 1, die weiter Folgendes einschliesst:
Empfang eines vom Rundfunk-Kunden gesandten Audio-Schaltbefehls, und in Beantwortung des Audio-Schaltbefehls, Senden des ersten Ausgabestroms an den Rundfunk-Kunden.

7. Die Methode gemäss Anspruch 1, bei der das Codieren des ersten Video-Stroms, des zweiten Video-Stroms, des ersten Audio-Stroms und des zweiten Audio-Stroms jeweils Folgends einschliesst:
Erfassen von Video-Codierungsparametern und Audio-Codierungsparametern für jeden AusgabeStrom zwecks Bestimmung des geforderten Codierungsparametersatzes;
Vergleich des geforderten Codierungsparametersatzes mit einem aktuellen Parametersatz, Bestimmung von Video-Codierungsparametern und/oder Audio-Codierungsparametern, die neu zu dem geforderten Codierungsparametersatz hinzugefügt wurden, wenn der geforderte Codierungsparametersatz und der aktuelle Codierungsparametersatz untereinander widersprüchlich sind, und Hinzufügen der neu hinzugefügten Video-Codierungsparameter und/oder Audio-Codierungsparameter zum aktuellen Codierungsparametersatz;
Bestimmung von Zielvideo-Codierungsparametern und/oder Zielaudio-Codierungsparametern, die im aktuellen Codierungsparametersatz aber nicht im geforderten Codierungsparamtersatz eingeschlossen sind, und Entfernen der Zielvideo-Codierungsparameter und/oder Zielaudio-Codierungsparametern aus dem aktuellen Codierungsparametersatz; und
nach der Einstellung Codierung jeweils des ersten Video-Stroms, des zweiten Video-Stroms, des ersten Audio-Stroms und des zweiten Audio-Stroms übereinstimmend mit den Video-Codierungsparametern und Audio-Codierungsparametern im aktuellen Codierungsparametersatz.

8. Die Methode gemäss Anspruch 1, bei der, wenn dem Benutzerkunden der erste Ausgabestrom und der zweite Ausgabestrom dem Rundfunkkunden bereitgestellt werden, die Methode weiter Folgendes einschliesst:
Vergleich eines geforderten Ausgabestromsatzes und eines aktuellen Ausgabestromsatzes, Bestimmung eines neu hinzugefügten Ausgabestroms zu dem geforderten Ausgabestromsatz, wenn der geforderte Ausgabestromsatz und der aktuelle Ausgabestromsatz untereinander widersprüchlich sind, und Erstellen einer Beziehung zwischen dem neu hinzugefügten Ausgabestrom und dem Benutzerkunden und/oder Rundfunkkunden, die zu der Push-Strom-Adresse des neu hinzugefügten Ausgabestroms gehören, und Bereitstellung des neu hinzugefügten Ausgabestroms dem Benutzerkunden und/oder Rundfunk-Kunden; und
Bestimmung eines Zielausgabestroms, der im aktuellen Ausgabestromsatz eingeschlossen ist aber nicht in dem geforderten Ausgabestromsatz, und unterbrechen der Bereitstellung des Zielausgabestroms.

9. Die Methode gemäss Anspruch 8, bei der vor der Bereitstellung des neu hinzugefügten Ausgabestroms an den Benutzerkunden oder den Rundfunkkunden, die Methode weiter Folgendes einschliesst:
Konfiguration der jedem neu hinzugefügten Ausgabestrom entsprechenden Integrationsparameter, wobei die Integrationsparameter zur Definierung des im neu hinzugefügten Ausgabestrom eingeschlossenen Videocodierungsstroms und/oder Audiocodierungsstrom benutzt werden.

10. Ein System zur Audio/Video-Synthetisierung, wobei das System in einem Cloud-Server eingesetzt wird und das System ein Answeisungssteuermodul, eine Datenstromsynthese und ein Verarbeitungsmodul, ein Datenstrom-Multiversions-Codierungsmodul und ein Datenzusammenführungs-Ausgabemodul einschliesst, wobei:
Das Anweisungssteuermodul konfiguriert ist, um eine Video-Syntheseanweisung und eine Audio-Syntheseanweisung vom Rundfunkkunden zu erhalten;
das Datenstromsynthese- und Verarbeitungsmodul konfiguriert ist, um einen ersten Video-Strom basierend auf vielzähligen Video-Eingabeströmen zu synthetisieren und einen zweiten Video-Strom basierend auf den vielzähligen Video-Eingabeströmen und dem ersten Video-Strom zu synthetisieren; und
konfiguriert ist, um jeweils einen ersten Audiostrom und einen zweiten Audiostrom basierend auf vielzähligen Audioeingabeströmen zu synthetisieren;
wobei das Datenstromsynthese- und Verarbeitungsmodul ein VideoBildsynthese- und Verarbeitungsmodul einschliesst, das Video-Bildsynthese- und Verarbeitungsmodul weiter konfiguriert ist, um:
Als Antwort auf die Videosintheseanweisungen einen oder mehrere Zielvideoeingabeströme von den vielzähligen Videoeingabeströmen zu bestimmen und
die Videobilder von dem einen oder den mehreren Zielvideoeingabeströmen in einem Videobild zu integrieren, wobei der dem integrierten Videobild entsprechende Videostrom, Videobild, das die Videobilder von dem einem oder den mehreren Zielvideoeingabeströmen einschliesst, als der erste Videostrom benutzt wird; und das integrierte Videobild vom ersten Videostrom und das Videobild von den vielzähligen Videoeingabeströmen in einem Videobild integriert wird, wobei der dem integrierten Videobild entsprechende Videostrom, Videobild, das das Videobild des ersten Videostroms und die Videobilder von den vielzähligen Videoeingabeströmen einschliesst, als der zweite Videostrom benutzt wird;
das Datenstrom-Multiversion-Codierungsmodul konfiguriert ist, um jeweils den ersten Videostrom und den zweiten Videostrom in vielzähligen, verschiedenen Codierungsversionen zu codieren, um entsprechend einen ersten Videostromcodierungssatz und einen zweiten Videostromcodierungssatz zu erhalten; und konfiguriert, um jeweils den ersten Audiostrom und den zweiten Audiostrom in vielzähligen, verschiedenen Codierungsversionen zu codieren, um entsprechend einen ersten Audiocodierungsstromsatz und einen zweiten Audiocodierungsstromsatz zu erhalten;
ein Datenzusammenführungs-Ausgabemodul konfiguriert ist, um einen ersten Videocodierungsstrom und einen ersten Audiocodierungsstrom aus jeweils dem ersten Videocodierungstromsatz und dem ersten Audiocodierungsstromsatz zu bestimmen, und den ersten Videocodierungsstrom und den ersten Audiocodierungstrom in einem ersten Ausgabestrom zu integrieren, der einem Benutzerkunden bereitgestellt wird; und auch konfiguriert, um einen zweiten Videocodierungsstrom und einen zweiten Audiocodierungsstrom aus jeweils dem zweiten Videocodierungsstromsatz und dem zweiten Audiocodierungsstromsatz zu bestimmen, und den zweiten Videocodierungsstrom und den zweiten Audiocodierungsstrom in einem zweiten Ausgabestrom zu integrieren, der dem Rundfunkkunden bereitgestellt wird.

11. Das System gemäss Anspruch 10, das weiter Folgendes einschliesst:
Ein Dateneingabemodul, das konfiguriert ist, um eine Pullstrom-Anweisung vom Rundfunkkunden zu empfangen und in Beantwortung vielzählige Audio- und Videodatenströme zu erfassen;
ein Decodierungs-Cachemodul, das konfiguriert ist, um jeden Audio/VideoDatenstrom von den besagten, vielzähligen Audio- und Videodatenströmen in einen Videodatenstrom und Audiodatenstrom zu decodieren und den decodierten Videodatenstrom und decodierten Audiodatenstrom separat zwischenzuspeichern, wobei entsprechend die vielzähligen Videoeingabeströme und vielzähligen Audioeingabeströme von den Cachespeichern des jeweiligen Videodatenstroms und Audiodatenstroms gelesen werden.

12. Das System gemäss Anspruch 10, bei dem das Videobildsynthese- und Verarbeitungsmodul Folgendes einschliesst:
Eine Bestimmungseinheit für den Integrationsparameter, die konfiguriert ist, um vorher ein Hintergrundbild zu erstellen, das mit der Auflösung des integrierten Videobildes übereinstimmt, und Integrationsparameter eines jeden zu integrierenden Videobildes zu bestimmen, wobei die Integrationsparameter mindestens eine Bildgrösse, eine Lage und eine Einblendungsreihenfolge einschliesst, und
eine Bildhinzufügungseinheit, die konfiguriert ist, um jedes im Hintergrundbild zu integrierende Videobild hinzuzufügen, um das integrierte Videobild übereinstimmend mit den Integrationsparametern zu bilden.

## Revendications

1. Une méthode de synthèse audio/vidéo, pour application sur un système de synthèse audio/vidéo déployé sur un serveur cloud, la méthode comprenant les pas suivants:
recevoir les instructions de synthèse vidéo envoyées par un client de diffusion, synthétiser un premier flux vidéo sur la base de plusieurs flux d'entrée vidéo, et synthétiser un deuxième flux vidéo sur la base de plusieurs flux d'entrée vidéo et du premier flux vidéo;
comme réponse aux instructions de synthèse vidéo, déterminer un ou plusieurs flux d'entrée vidéo cibles à partir de plusieurs flux d'entrée vidéo; et intégrer les images vidéo d'un ou de plusieurs flux d'entrée vidéo cibles dans une image vidéo; où un flux vidéo, correspondant à l'image vidéo intégrée qui inclue les images vidéo d'un ou de plusieurs flux d'entrée vidéo cibles, est utilisé comme premier flux vidéo; et intégrer l'image vidéo du premier flux vidéo et les images vidéo de plusieurs flux d'entrée vidéo dans une image vidéo; où, un flux vidéo correspondant à l'image vidéo intégrée qui inclue l'image vidéo du premier flux vidéo et les images vidéo de plusieurs flux d'entrée vidéo, est utilisé comme deuxième flux vidéo;
recevoir les instructions de synthèse audio envoyées par le client de diffusion, et synthétiser respectivement un premier flux audio et un deuxième flux audio sur la base de plusieurs flux d'entrée audio;
encoder respectivement le premier flux vidéo, le deuxième flux vidéo, le premier flux audio et le deuxième flux audio selon plusieurs versions de codage différentes pour obtenir de manière correspondante un premier ensemble de flux de codage vidéo, un deuxième ensemble de flux de codage vidéo, un premier ensemble de flux de codage audio et un deuxième ensemble de flux de codage audio;
sélectionner respectivement un premier flux de codage vidéo et un premier flux de codage audio du premier ensemble de flux de codage vidéo et du premier ensemble de flux de codage audio, et intégrer le premier flux de codage vidéo dans un premier flux de sortie, et fournir le premier flux de sortie à un client d'utilisateur; et
sélectionner respectivement un deuxième flux de codage vidéo et un deuxième flux de codage audio à partir du deuxième ensemble de flux de codage vidéo et du deuxième ensemble de flux de codage audio, et intégrer le deuxième flux de codage vidéo et le deuxième flux de codage audio dans un deuxième flux de sortie, et fournir le deuxième flux de sortie au client de diffusion.

2. La méthode conformément à la revendication1, où
avant de recevoir les instructions de synthèse vidéo du client de diffusion, la méthode comprend en outre les pas suivants:
recevoir une instruction de traction de flux du client de diffusion et, en réponse, obtenir plusieurs flux de données audio/vidéo;
décoder chaque flux de données audio/vidéo de plusieurs flux de données audio/vidéo dans un flux de données vidéo et dans un flux de données audio; et mettre en cache le flux de données vidéo décodés et le flux de données audio décodés de manière séparée; et
de manière correspondante, lire les différents flux d'entrée vidéo et les différents flux d'entrée audio à partir des caches du flux de données vidéo et du flux de données audio respectivement.

3. La méthode conformément à la revendication 1, où lorsque l'on intègre les différentes images vidéo dans une image vidéo, la méthode comprend en outre les pas suivants:
pré-créer une image de fond correspondant à la résolution de l'image vidéo intégrée, et déterminer les paramètres d'intégration de chaque image vidéo à intégrer, où les paramètres d'intégration comprennent au moins les dimensions, l'emplacement et le niveau de superposition de l'image; et
ajouter chaque image vidéo à intégrer à l'image de fond pour former l'image vidéo intégrée conformément aux paramètres d'intégration.

4. La méthode conformément à la revendication 1, où, après la synthèse du deuxième flux audio, la méthode comprend en outre les pas suivants:
recevoir les instructions règlementaires comprenant les paramètres de synthèse audio envoyés par le client de diffusion, ajuster le deuxième flux audio conformément aux paramètres de synthèse audio et retourner le deuxième flux audio ajusté vers le client de diffusion; et
recevoir une instruction de synchronisation audio envoyée par le client de diffusion, ajuster le premier flux audio conformément aux paramètres de synthèse audio et fournir le premier flux audio ajusté au client d'utilisateur.

5. La méthode conformément à la revendication1, où, lorsque la synthèse du premier flux audio et du deuxième flux audio est effectuée respectivement, la méthode comprend en outre les pas suivants:
déterminer si les instructions de synthèse audio incluent une instruction de copie audio, et, si elle est incluse, copier le premier flux audio, et utiliser les données copiées comme deuxième flux audio.

6. La méthode conformément à la revendication 1, comprenant en outre les pas suivants:
recevoir une instruction de commutation audio envoyée par le client de diffusion, et, comme réponse à ladite instruction de commutation audio, envoyer le premier flux de sortie vers le client de diffusion.

7. La méthode conformément à la revendication 1, où le codage du premier flux vidéo, du deuxième flux vidéo, du premier flux audio et du deuxième flux audio comprend respectivement les pas suivants:
obtenir les paramètres de codage vidéo et les paramètres de codage audio de chaque flux de sortie pour déterminer la série de paramètres de codage requise;
comparer la série de paramètres de codage requise à la série de paramètres de codage actuelle; déterminer les paramètres de codage vidéo et/ou les paramètres de codage audio qui sont nouvellement ajoutés à la série de paramètres de codage requise, si la série de paramètres de codage requise et la série de paramètres de codage actuelle ne sont pas cohérentes entre elles; et ajouter les paramètres de codage vidéo et/ou les paramètres de codage audio nouvellement ajoutés à la série de paramètres de codage actuelle;
déterminer les paramètres de codage vidéo cibles et/ou les paramètres de codage audio cibles qui sont inclus dans la série de paramètres de codage actuelle mais qui ne sont pas inclus dans la série de paramètres de codage requise, et supprimer les paramètres de codage vidéo cibles et/ou les paramètres de codage audio cibles de la série de paramètres de codage actuelle; et
encoder le premier flux vidéo, le deuxième flux vidéo, le premier flux audio et le deuxième flux audio, respectivement, conformément aux paramètres de codage vidéo et aux paramètres de codage audio, dans la série de paramètres de codage actuelle après l'ajustement.

8. La méthode conformément à la revendication 1, où, après avoir fourni le premier flux de sortie au client d'utilisateur et après avoir fourni le deuxième flux de sortie au client de diffusion la méthode comprend en outre les pas suivants:
comparer l'ensemble de flux de sortie requis et l'ensemble de flux de sortie actuel; déterminer un flux de sortie nouvellement ajouté dans l'ensemble de flux de sortie requis, si l'ensemble de flux de sortie requis et l'ensemble de flux de sortie actuel ne sont pas cohérents entre eux; et établir une relation ente le flux de sortie nouvellement ajouté et le client d'utilisateur et/ou le client de diffusion qui correspond à l'adresse du flux push du flux de sortie nouvellement ajouté, et fournir le flux de sortie nouvellement ajouté au client d'utilisateur et/ou au client de diffusion; et
déterminer le flux de sortie cible inclus dans l'ensemble de flux de sortie actuel mais qui n'est pas inclus dans l'ensemble de flux de sortie requis et arrêter de fournir le flux de sortie cible.

9. La méthode conformément à la revendication 8, où, avant de fournir le flux de sortie nouvellement ajouté au client d'utilisateur et/ou au client de diffusion, la méthode comprend en outre les pas suivants:
configurer des paramètres d'intégration correspondant à chaque flux de sortie nouvellement ajouté, où les paramètres d'intégration sont utilisés pour définir le flux de codage vidéo et/ou le flux de codage audio inclus dans le flux de sortie nouvellement ajouté.

10. Un système de synthèse audio/vidéo, où le système est déployé sur un serveur cloud, et le système comprend un module de contrôle d'instructions, un module de synthèse et de traitement de flux de données, un module de codage multiversion de flux de données et un module de sortie de fusion de données, où:
le module de contrôle d'instructions est configuré pour recevoir une instruction de synthèse vidéo et une instruction de synthèse audio du client de diffusion;
le module de synthèse et traitement de flux de données est configuré pour synthétiser un premier flux vidéo sur la base de plusieurs flux d'entrée vidéo et pour synthétiser un deuxième flux vidéo sur la base de plusieurs flux d'entrée vidéo et sur le premier flux vidéo; et il est configuré pour synthétiser, respectivement, un premier flux audio et un deuxième flux audio, sur la base de plusieurs flux d'entrée audio;
où le module de synthèse et de traitement des flux de données comprend un module de synthèse et de traitement d'images vidéo, le module de synthèse et de traitement d'images vidéo étant configuré en outre pour effectuer les pas suivants:
comme réponse à l'instruction de synthèse vidéo, déterminer un ou plusieurs flux d'entrée vidéo cibles à partir de plusieurs flux d'entrée vidéo; et
intégrer les images vidéo d'un ou de plusieurs flux d'entrée vidéo cibles dans une image vidéo, où, un flux vidéo, correspondant à l'image vidéo intégrée, qui comprend des images vidéo d'un ou de plusieurs flux d'entrée vidéo cibles, est utilisé comme premier flux vidéo; et intégrer l'image vidéo du premier flux vidéo et les images vidéo de plusieurs flux d'entrée vidéo dans une image vidéo, où le flux vidéo correspondant à l'image vidéo intégrée qui comprend l'image vidéo du premier flux vidéo et les images vidéo de plusieurs flux d'entrée vidéo est utilisé comme deuxième flux vidéo;
le module de codage multiversion des flux de données est configuré pour encoder le premier flux vidéo et le deuxième flux vidéo, respectivement, dans plusieurs versions de codage différentes pour obtenir, de manière correspondante, un premier ensemble de flux de codage vidéo et un deuxième ensemble de flux de codage vidéo; et il est configuré pour encoder le premier flux audio et le deuxième flux audio, respectivement, dans plusieurs versions de codage différentes pour obtenir, de manière correspondante, un premier ensemble de flux de codage audio et un deuxième ensemble de flux de codage audio; et
le module de sortie de fusion de données est configuré pour déterminer un premier flux de codage vidéo et un premier flux de codage audio du premier ensemble de flux de codage vidéo et du premier ensemble de flux de codage audio, respectivement, et intégrer le premier flux de codage vidéo et le premier flux de codage audio dans un premier flux de sortie qui est fourni à un client d'utilisateur; et il est également configuré pour déterminer un deuxième flux de codage vidéo et un deuxième flux de codage audio à partir du deuxième ensemble de flux de codage vidéo et du deuxième ensemble de flux de codage audio, respectivement, et intégrer le deuxième flux de codage vidéo et le deuxième flux de codage audio dans un deuxième flux de sortie qui est fourni vers le client de diffusion.

11. Le système conformément à la revendication 10, comprenant en outre les éléments suivants:
un module d'entrée de données, configuré pour recevoir une instruction de traction de flux du client de diffusion, et, comme réponse, obtenir plusieurs flux de données vidéo et audio:
un module cache de décodage, configuré pour décoder chaque flux de données audio/vidéo desdits flux de données audio/vidéo dans un flux de donnés vidéo et un flux de données audio, et mettre en cache le flux de données vidéo et le flux de données audio décodées, séparément où, de manière correspondante, les différents flux d'entrée vidéo et les différents flux d'entrée audio sont lus à partir des caches du flux de données vidéo et du flux de données audio, respectivement.

12. Le système conformément à la revendication 10, où le module de synthèse et de traitement d'images vidéo comprend:
une unité de détermination des paramètres d'intégration, configurée pour précréer une image de fond qui corresponde à une résolution de l'image vidéo intégrée, et déterminer les paramètres d'intégration de chaque image vidéo à intégrer, où les paramètres d'intégration comprennent au moins des dimensions, un l'emplacement et un ordre de superposition de l'image; et
une unité d'addition d'images, configurée pour ajouter chaque image vidéo à intégrer dans l'image de fond pour former l'image vidéo intégrée conformément aux paramètres d'intégration.
